(19) Europäisches Patentamt
European Patent Office
Office européen des brevets

(11) **EP 3 068 636 B1**

## (12) FASCICULE DE BREVET EUROPEEN

(45) Date de publication et mention
de la délivrance du brevet:
**07.02.2018 Bulletin 2018/06**

(21) Numéro de dépôt: **14793235.4**

(22) Date de dépôt: **02.10.2014**

(51) Int Cl.:
***B60C 23/06*** *(2006.01)*

(86) Numéro de dépôt international:
**PCT/FR2014/052498**

(87) Numéro de publication internationale:
**WO 2015/071557 (21.05.2015 Gazette 2015/20)**

(54) **PROCEDE D'AIDE A LA DECISION PAR RESEAU DE NEURONES DANS UN SYSTEME DE SURVEILLANCE DE LA PRESSION DES PNEUMATIQUES D'UN VEHICULE AUTOMOBILE**

VERFAHREN ZUR DURCH NEURONALES NETWERK BASIERTEN ENTSCHEIDUNGSFINDUNG BEI EINER REIFENÜBERWACHUNGSVORRICHTUNG

METHOD OF DECISION MAKING FOR A TIRE PRESSURE MONITORING SYSTEM BASED ON NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2013 FR 1361108**

(43) Date de publication de la demande:
**21.09.2016 Bulletin 2016/38**

(73) Titulaire: **Renault S.A.S.**
**92100 Boulogne-Billancourt (FR)**

(72) Inventeurs:
• **PITA-GIL, Guillermo**
**F-75014 Paris (FR)**
• **SAINT-LOUP, Philippe**
**F-78760 Jouars Pontchartrain (FR)**
• **DAVINS-VALLDAURA, Joan**
**F-75014 Paris (FR)**

(56) Documents cités:
**EP-A2- 0 933 237        WO-A1-2005/108123**
**WO-A1-2008/113378**

**EP 3 068 636 B1**

**Description**

La présente invention concerne le domaine du diagnostic de l'état de gonflage des pneumatiques équipant des roues d'un véhicule automobile. Plus particulièrement, l'invention concerne les méthodes conduisant à une détection indirecte d'un état de gonflage des pneumatiques.

Un état de gonflage défaillant d'un pneumatique, autrement dit un sous-gonflage de ce pneumatique, se caractérise par une baisse de pression du pneumatique par rapport à une pression normale de celui-ci, étant entendu que les cas de sous-gonflage englobent les cas de crevaison. Or, un état de gonflage défaillant d'un pneumatique peut provoquer l'éclatement de celui-ci, dans certaines conditions de conduite, mettant gravement en danger la sécurité des personnes embarquées dans le véhicule. Même en l'absence d'éclatement, un sous-gonflage présente l'inconvénient d'accroître la consommation de carburant du véhicule et la rapidité d'usure du pneumatique.

C'est pourquoi, une règlementation en cours d'adoption à l'échelle mondiale impose d'équiper progressivement tous les nouveaux véhicules automobiles de systèmes de surveillance de la pression des pneumatiques ou SSPP. La majorité de ces systèmes utilisent des capteurs de pression installés sur chaque pneumatique pour transmettre une information sur la pression des pneumatiques en temps réel à l'unité de contrôle moteur ou à une unité de calcul spécifique du véhicule pour traitement et prise en compte de cette information parmi divers phénomènes dynamiques susceptibles d'affecter eux aussi, de manière transitoire par exemple, la pression dans les pneumatiques. En cas de sous-gonflage, le système est conçu pour transmettre automatiquement un message d'alerte au conducteur, par exemple sous la forme d'un affichage sur le tableau de bord. Ce type de système nécessite toutefois d'intégrer aux pneumatiques un équipement de mesure relativement coûteux.

Par opposition avec ce premier type de système SSPP, un second type de système SSPP, dit SSPP indirect, se caractérise par l'absence de capteurs de pression et repose sur une estimation par des algorithmes appropriés de la probabilité de sous-gonflage de chaque pneumatique sur une plage de vitesse donnée, ainsi que d'un taux de confiance associé à cette probabilité, dépendant du temps passé dans la plage de vitesse, à partir de l'étude de la vitesse des roues du véhicule. La probabilité représente les chances en pourcentage d'être dans un état de sous-gonflage pour une roue donnée. Cette valeur est calculée en instantanée sur quelques périodes d'échantillonnage. Le taux de confiance représente un facteur d'oubli nécessaire au changement de plage de vitesse.

Même si ce second type de système de surveillance peut facilement être mis en oeuvre par exemple à partir des valeurs de vitesse de rotation des roues estimées ou mesurées par les capteurs du contrôle d'anti-blocage des roues, il est toutefois moins précis que les systèmes de surveillance directs. En effet, en raison de l'absence de capteurs de pression, le nombre de fausses alertes de détection de sous-gonflage est susceptible d'augmenter car la probabilité estimée par les algorithmes dépend du temps de roulage, de l'apprentissage et de leur fiabilité à toutes les situations.

Les systèmes de surveillance indirects reposent plus précisément soit sur une analyse du rayon de roulement de la roue, soit sur une analyse des vibrations de la roue. L'analyse du rayon de la roue est mise en oeuvre par les systèmes de surveillance indirects qui reposent sur un algorithme basé sur l'étude de l'écart de vitesse entre chacune des roues. L'effet ici exploité tient au fait qu'un sous-gonflage d'un pneumatique induit une variation du rayon de roulement et donc de la vitesse angulaire. Ainsi, dès qu'un écart de vitesse entre des roues s'accroît, un problème de sous-gonflage est remonté. On connaît par exemple du document de brevet FR2927018 un système de surveillance indirect de l'état de gonflage des pneumatiques, mettant en oeuvre un tel algorithme de calcul comportant une mesure des vitesses angulaires des roues du véhicule, un calcul de plusieurs critères de comparaison des vitesses angulaires mesurées des roues et une analyse des critères calculés pour détecter l'état de gonflage de chaque roue du véhicule. La validité de ces critères, basés sur l'étude de l'écart des vitesses angulaires mesurées entre chacune des roues, est importante dans la mesure où de nombreux phénomènes dynamiques sont susceptibles de provoquer des variations non homogènes parmi les rayons de roulement des roues et ainsi augmenter le taux de fausses alertes concernant un état défectueux des pneumatiques. L'algorithme est alors conçu pour s'assurer qu'une disparité parmi les vitesses angulaires mesurées des roues présente une probabilité forte de traduire un état de gonflage défectueux d'au moins un des pneumatiques équipant le véhicule. La performance de cet algorithme dépend cependant du nombre de roues qui sont dégonflées. Ainsi, si un tel algorithme possède de bonnes performances lorsque la situation du véhicule correspond à une crevaison (dégonflage d'une roue), il n'est pas suffisamment performant dans les cas de diffusion (dégonflage lent de plusieurs roues).

L'analyse de la vibration de la roue est quant à elle mise en oeuvre par les systèmes de surveillance indirects fondés sur un algorithme qui repose sur l'étude spectrale de la vitesse de roue afin de surveiller des modes spécifiques. L'effet ici exploité tient au fait que les caractéristiques spectrales (par exemple, la distribution d'énergie dans différentes bandes de fréquences) d'un signal de vitesse angulaire de roue dépendent de la pression du pneumatique. Ainsi, si les modes surveillés sortent des gabarits qui leur sont propres, le système en déduit un problème de sous-gonflage. On connaît par exemple du document de brevet WO2012127139 un système de détection indirecte de l'état de gonflage des pneumatiques mettant en oeuvre un tel algorithme. Contrairement à l'algorithme précédent, qui repose sur l'analyse du rayon de roulement, cet algorithme exploitant l'étude spectrale du signal de vitesse angulaire de roue possède de bonnes performances dans les cas de diffusion (dégonflage lente de plusieurs roues), tandis qu'il n'est pas suffisamment performant pour les cas de crevaison (dégonflage d'une roue).

Il s'avère ainsi que les performances de chacun des algorithmes selon les deux méthodes d'analyse mises en oeuvre par les systèmes de surveillance indirects, dépendent du nombre de roues qui sont dégonflées.

Le brevet US2007061100 décrit un système de surveillance de la pression des pneumatiques mettant en oeuvre les deux méthodes d'analyses ci-dessus exposées, basées respectivement sur l'analyse du rayon de la roue et sur l'analyse de la vibration de la roue, dans lequel l'estimation de l'état de gonflage pour chaque pneumatique est basée à la fois sur les valeurs de sortie de l'algorithme selon la méthode d'analyse du rayon de la roue et sur les valeurs de sortie de l'algorithme selon la méthode d'analyse de la vibration des roues, de façon à compenser les carences individuelles des algorithmes selon les deux méthodes d'analyse. Plus précisément, on calcule, pour chaque pneumatique, une première valeur de probabilité de sous-gonflage issue de la valeur de sortie de l'algorithme selon la méthode d'analyse du rayon de la roue et une seconde valeur de probabilité de sous-gonflage issue de la valeur de sortie de l'algorithme selon la méthode d'analyse de la vibration de la roue, chaque valeur de probabilité étant indicative d'un écart entre la valeur de sortie et une valeur nominale et étant une fonction de répartition cumulative de probabilité. De là, l'estimation de l'état de gonflage pour chaque pneumatique est calculée à partir du produit des première et seconde valeurs de probabilité de sous-gonflage. Cette méthode de fusion des différentes valeurs de probabilité issues des algorithmes selon les deux méthodes d'analyse différentes n'est toutefois pas optimale.

Le document EP0933237 propose d'utiliser un réseau de neurones pour déterminer la pression d'un pneumatique, le réseau de neurones recevant entrée une donnée d'accélération verticale du pneumatique ainsi que la vitesse longitudinale du véhicule.

Un but de l'invention est de proposer un procédé d'estimation en temps réel de l'apparition d'un défaut de pression sur au moins un pneumatique équipant des roues d'un véhicule automobile, capable de fusionner les données issues des algorithmes selon les deux méthodes d'analyse des vitesses de roue exposées plus haut et d'améliorer la robustesse de l'estimation dans les cas de sous-gonflage en tenant compte des performances des deux algorithmes.

A cette fin, l'invention a pour objet un procédé d'estimation de l'apparition d'un défaut de pression sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, une donnée de probabilité de sous-gonflage et de taux de confiance associé en fonction d'une plage de vitesse de la roue, ledit procédé étant caractérisé en ce qu'il utilise un module de décision basé sur un réseau de neurones dont les entrées sont les données de probabilité et de taux de confiance pour chaque roue fournies par les premier et deuxième algorithmes, ledit réseau de neurones ayant été entraîné à partir de telles données au cours d'une phase d'apprentissage préalable et fournissant en sortie pour chaque roue du véhicule un score de détection d'état de sous-gonflage de pneumatique.

Le procédé comprend avantageusement des étapes de relever pendant la phase d'apprentissage des données fournies par les premier et deuxième algorithmes et appliquer des premières règles de décision prédéfinies pour classer chaque situation de sous-gonflage des pneumatiques détectée à partir des données des premier et deuxième algorithmes dans une catégorie de bonne ou mauvaise détection d'une situation de sous-gonflage, ainsi que de bon ou mauvais rejet d'une situation de sous-gonflage ; créer une base d'apprentissage, pendant la phase d'apprentissage, répertoriant pour lesdites situations leur classification préalablement établie et des caractéristiques issues des données des premier et deuxième algorithmes ; effectuer l'entraînement dudit réseau de neurones par la base d'apprentissage pour élaborer des secondes règles de décision permettant de calculer le score de détection d'état de sous-gonflage pour chaque roue correspondant à une situation de sous-gonflage détectée à partir des données fusionnées des premier et deuxième algorithmes ; et calculer le score, pendant une phase d'exécution, en appliquant les secondes règles de décision aux données fournies par les premier et deuxième algorithmes.

De préférence, le procédé comprend une étape de décision finale pour détecter si au moins un des pneumatiques équipant les roues du véhicule est dans un état de sous-gonflage, basée sur un compromis entre les différents scores de détection d'état de sous-gonflage de pneumatique fournis en sortie du réseau de neurones pour chaque roue respectivement, de manière à positionner un unique seuil de calibration de la détection.

De préférence, le compromis réalise un seuillage des scores en sortie du réseau de neurones.

En variante, le compromis met en oeuvre un filtre passe-bas du premier ordre appliqué aux scores en sortie du réseau de neurones.

En variante encore, le compromis réalise une intégration des scores en sortie du réseau de neurones, les valeurs de score intégrées étant saturées par rapport à des valeurs de saturation prédéfinies.

L'invention concerne aussi un système de surveillance de la pression des pneumatiques équipant les roues d'un véhicule automobile du type comportant un premier algorithme d'estimation de l'apparition d'un défaut de pression sur au moins un des pneumatiques basé sur une analyse de l'écart de vitesses entre chacune des roues et un deuxième algorithme d'estimation de l'apparition d'un défaut de pression sur au moins un des pneumatiques basé sur une analyse spectrale de la vitesse de roue, chacun des premier et deuxième algorithmes étant adapté pour fournir, pour chaque roue, une donnée de probabilité de sous-gonflage et de taux de confiance associé en fonction d'une plage de vitesse de la roue, ledit système étant caractérisé en ce qu'il comprend un module de décision basé sur un réseau de neurones dont les entrées sont les données de probabilité et de taux de confiance pour chaque roue fournies par les premier et deuxième algorithmes, ledit réseau de neurones ayant été entraîné à partir de telles données au cours d'une phase d'apprentissage préalable et étant apte à fournir en sortie pour chaque roue du véhicule un score de détection d'état de sous-gonflage de pneumatique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est un schéma illustrant un exemple de matrice de confusion obtenue pour le classifieur neuronal binaire à deux classes avec les différentes appellations des cas de détections ;
- la Figure 2 est un schéma illustrant le modèle de calcul d'un réseau de neurones;
- la Figure 3 est un schéma illustrant des résultats de test de détection suivant les principes de l'invention mettant en oeuvre des réseaux de neurones construits avec des quantifications de paramètres différents pour chaque réseau de neurones ;

- la Figure 4 est un schéma illustrant un exemple des scores de détection obtenus en sortie d'un réseau de neurones modélisé sous Simulink®, dans le cas d'un essai où seule la roue avant gauche est dégonflée de -20% ;
- la Figure 5 est un schéma illustrant les résultats obtenus pour différentes méthode de compromis entre les différents scores de détection en sortie du réseau de neurones, en utilisant un réseau de neurones à 20 neurones avec la quantification la plus précise (8 chiffres significatifs) dans le cas où la roue avant gauche est dégonflée de -20%.

On souhaite donc caractériser de façon robuste l'apparition d'un défaut de pression sur au moins un des pneumatiques équipant les roues du véhicule en répondant à la question de savoir si l'un des pneumatiques présente un état de sous-gonflage (encore dit de dégonflage) compte tenu des données de probabilité et de taux de confiance associé, fournies pour chaque pneumatique et par plage de vitesse, par les deux algorithmes travaillant respectivement selon la méthode d'analyse de l'écart de vitesse angulaire entre chacune des roues et selon la méthode d'analyse spectrale de la vitesse de roue.

Le module de décision selon l'invention a pour objectif de fusionner les données de détection des deux algorithmes afin de tirer le meilleur parti de chaque système et minimiser les erreurs de détection par rapport à la situation (performance des deux algorithmes) et à la phase de roulage. Conformément à l'invention, le module de décision est basé sur un réseau de neurones dont les entrées sont les données de probabilité et de taux de confiance pour chaque roue fournies par les premier et deuxième algorithmes. Comme il sera vu plus en détail par la suite, le réseau de neurones est entraîné à partir de telles données dans une phase d'apprentissage, de manière à être opérationnel dans une phase d'exécution dans laquelle le réseau de neurones fournit en sortie, pour chaque roue du véhicule, un score de détection d'état de sous-gonflage de pneumatique compris entre 0 et 1. Un seuil est ensuite appliqué à chaque score fourni en sortie par le réseau de neurones dans une étape de décision finale, permettant de générer une unique sortie sous forme d'un booléen apte à déclencher une alerte pour le conducteur du véhicule l'informant si au moins un des pneumatiques équipant les roues du véhicule est dans un état de sous-gonflage.

Au final, l'utilisation d'un réseau de neurones selon l'invention pour appliquer une stratégie de fusion des premier et deuxième algorithmes de détection dans le cadre du procédé d'estimation de l'apparition d'un défaut de pression pneumatique selon l'invention permet avantageusement d'obtenir des résultats statistiquement très satisfaisants dans la détection automatique et indirecte d'une situation dans laquelle au moins une des roues du véhicule est dans un état de sous-gonflage (dégonflée).

Ainsi, le module de décision par réseau de neurones doit permettre de détecter de façon robuste quand au moins un des pneumatiques équipant les roues du véhicule est dans un état de sous-gonflage. En termes de test d'hypothèse, le problème peut donc être formulé sous forme de classification binaire à deux hypothèses ou classes :

- H0 (rejet) : aucune roue n'est en état de sous-gonflage ;
- H1 (détection) : au moins une roue est en état de sous-gonflage.

Une formulation alternative du problème, permettant un meilleur diagnostic consiste à identifier autant d'hypothèses qu'il y a de cas de dégonflage des roues, c'est-à-dire 15 cas, plus un cas de rejet :

- H0 (rejet) : aucune roue n'est dégonflée ;
- H1 : VG dégonflée ;

- H2 : VD dégonflée ;
- H3 : RG dégonflée ;
- H4 : RD dégonflée ;
- H5 : VG & VD dégonflées ;
- H6 : RG & RD dégonflées ;
- H7 : VG & RG dégonflées ;
- H8 : VD & RD dégonflées ;
- H9 : VG & RD dégonflées ;
- H10 : VD & RG dégonflées ;
- H11 : VG & VD & RG dégonflées ;
- H12 : VG & VD & RD dégonflées ;
- H13 : VG & RD & RG dégonflées ;
- H14 : VD & RD & RG dégonflées ;
- H15 : VG &VD & RG & RD dégonflées;

Avec :

V = avant,
R = arrière,
G = gauche,
D = droite.

Cette formulation permet en effet de diagnostiquer tous les types d'erreurs de détections et de détecter des erreurs récurrentes dans la classification. Elle nécessite cependant de disposer de suffisamment de cas tests représentatifs des différentes classes pour pouvoir établir des résultats significatifs statistiquement. En effet, plus la base d'apprentissage contiendra de configurations possibles de cas à classer, meilleures seront les performances.

L'efficacité du système (notée E) fournit un taux global des performances du système. Sur une base de cas de test constituée de N essais, elle est obtenue en faisant le rapport du nombre de cas correctement classés sur le nombre total d'essais testés et mesurés. Elle est séparée en deux types de bonnes classifications :

- le taux de bonnes détections, noté $T_{BD}$ indique le nombre de cas de test dans une situation de sous-gonflage correctement classés (H1) ;
- le taux de bons rejets, noté TBR indique le nombre de cas de test dans une situation de non sous-gonflage correctement rejetés (H0).

L'erreur de classification est quant à elle séparée en deux types d'erreurs :

- le taux de mauvaises détections, dit encore de fausses détections ou de fausses alarmes, noté $T_{MD}$, indique le nombre de cas de test mal classés. Dans le cas d'un système multi-classes comme exposé ci-dessus, il cumule le nombre de cas de test correspondant aux différentes situations de dégonflage mal classées ;
- le taux de mauvais rejets ou de non détection, noté $T_{MR}$ indique le nombre de cas de test dans une situation de sous-gonflage classés comme non dégonflés (rejet).

D'autres critères fournissent une description plus détaillée des résultats dans le cas d'un système à plusieurs classes en permettent une analyse plus fine des résultats. C'est le cas de la matrice de confusion et des courbes ROC (Receiver Operating Curve) présentées ci-après.

La matrice de confusion - ou matrice de classification - $M_c$ présente de manière condensée les performances d'un classifieur en termes de bonnes et mauvaises détection ainsi que de bons et mauvais rejets.

Pour un problème de classification à C classes, 16 dans notre cas, une matrice carrée de taille CxC incluant la classe de rejet est organisée comme suit :

- chaque ligne de la matrice indique les cas de situation de sous-gonflage connus ;
- chaque colonne de la matrice indique les cas de de situation de sous-gonflage détectés.

Ainsi, sur la diagonale de cette matrice, se trouvent toutes les bonnes détections et le taux de bonne détection $T_{BD}$ vaut :

$$T_{BD} = \frac{tr(M_c)}{\sum_{i,j} M_c(i,j)}$$

avec $tr(M_c)$ : la trace de $M_c$, soit la somme des éléments diagonaux de $M_c$.

Dans le cas d'un problème binaire (test d'hypothèse), la partie triangulaire supérieure de la matrice indique le nombre de mauvaises détections et la partie triangulaire inférieure indique le nombre mauvais rejets (ou non détections).

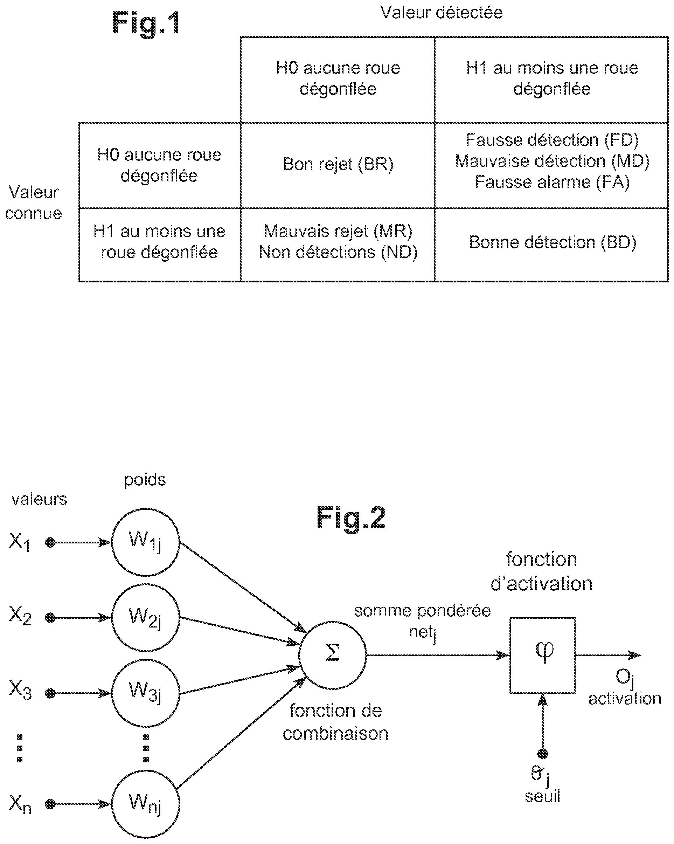

La figure 1 illustre un exemple de matrice de confusion obtenue pour le classifieur neuronal binaire à deux classes avec les différentes appellations des cas de détections.

Les courbes ROC fournissent une information graphique qui résume la performance statistique du classifieur neuronal en termes de compromis entre taux de bonnes détections et taux de mauvaises détections ou fausses alarmes.

Le compromis s'effectue au niveau du réglage du seuil sur les scores de sorties d'un classifieur. Les scores de sortie d'un classifieur peuvent être vus comme des probabilités d'un cas testé d'appartenir à une classe cible, la décision finale étant obtenue en fixant un seuil sur ces scores. Pour un seuil très haut, lorsque tous les cas testés sont rejetés, $T_{MR} = 0$ et $T_{BD} = 0$. A l'inverse pour un seuil bas, dans le cas d'un système binaire, tous les cas testés sont acceptés, soit $T_{BD} = 1$ et comme il n'y a plus de rejet $T_{MR} = 1$.

Les courbes ROC représentent l'évolution du compromis ($T_{MR}$, $T_{BD}$) en fonction des valeurs de seuil. Ces courbes permettent donc de calibrer la décision d'un système en fonction d'une fonction de coût établissant une pondération entre bonne détection et fausse alarme. Toutefois, dans le cas d'un système multi-classes comme exposé ci-dessus, le réglage du seuil devient un problème multidimensionnel et ces courbes ROC ne sont plus adaptées.

Les classes de cas de situation de sous-gonflage des roues étant définies, à partir de la base d'apprentissage comprenant les configurations possibles des cas pouvant être rencontrés, la phase d'apprentissage permet, au moyen de différents procédés connus, l'élaboration d'un module de décision à base de réseau de neurones destiné à la phase d'exécution mettant en oeuvre une stratégie de fusion des détections issues des premier et deuxième algorithmes de détection exploitant les vitesses angulaires des roues selon les principes exposés plus haut.

Ainsi, les entrées du module de décision à base de réseau de neurones sont imposées par les sorties desdits algorithmes, soient 16 entrées, avec 8 entrées pour chaque algorithme et 2 entrées par roue : une donnée de probabilité de détection de sous-gonflage et un taux de confiance en cette probabilité. Le module de décision à base de réseau de neurones alors renvoie 4 sorties - une sortie par roue - correspondant à un score de détection d'état de sous-gonflage compris entre 0 et 1. Un seuil de détection est ensuite appliqué à chaque sortie pour lever une détection sur une roue.

Les principes du module de décision selon l'invention ont été décrits par le biais d'une modélisation utilisant le logiciel connu sous le nom Simulink® sous Matlab®, suivant les étapes suivantes décrites à titre d'exemple de réalisation.

Les données fournies par les premier et deuxième algorithmes sont relevées pendant une phase d'apprentissage à échantillonnage régulier, par exemple toutes les 60 secondes, pour être classées suivant la formulation multi-classes exposée plus haut, de manière à former la base d'apprentissage avec laquelle le réseau de neurones est appris avec un algorithme de rétropropagation optimale. Le réseau appris est de type « feedforward », qui est un type de réseau standard constitué d'une succession de 2 couches (1 couche d'entrée et 1 couche cachée).

Comme illustré schématiquement sur la figure 2, un réseau de neurones est un modèle de calcul dont la conception est très schématiquement inspirée du fonctionnement des neurones biologiques. Le neurone calcule la somme de ses entrées puis cette valeur passe à travers la fonction d'activation pour produire sa sortie. Un réseau de neurones est en général composé d'une succession de couches dont chacune prend ses entrées sur les sorties de la précédente. Chaque couche (i) est composée de $N_i$ neurones, prenant leurs entrées sur les $N_{i-1}$ neurones de la couche précédente. À chaque synapse est associé un poids synaptique, de sorte que les $N_{i-1}$ neurones sont multipliés par ce poids, puis additionnés par les neurones de niveau i, ce qui est équivalent à multiplier le vecteur d'entrée par une matrice de transformation.

Les réseaux appris sont donc constitués de 2 couches et le nombre de neurones constitue le seul paramètre à régler. En variante, on peut utiliser plus de deux couches. Pour la prise de décision finale, différentes stratégies ont été envisagées pour analyser les scores renvoyés pour chaque roue par le module de décision les réseaux :

- seuillage de la sortie
- intégration du score centré sur 0
- filtre passe bas premier ordre, pour lisser la détection et éviter des pics du score générant des fausses détections.

Dans les trois cas, la calibration du système se fait par réglage d'un seul seuil, d'où l'avantage de notre invention.

Les intervalles de confiance (IC) des différents résultats fournis par les réseaux appris sont calculés en fonction du nombre $N_C$ de test dits clients (cas de test dans une situation de sous-gonflage à détecter) et du nombre $N_I$ de tests dits imposteurs (cas de test dans une situation de non sous-gonflage à rejeter). Ces intervalles sont calculés selon la méthode des tests statistiques Bengio-Mariéthoz, sous l'hypothèse que les résultats du module de décision à base de réseau de neurones suivent une distribution normale autour de leur valeur moyenne d'erreur.

Les intervalles de confiances autour des taux de mauvaises détections $T_{MD}$ et des taux de mauvais rejets $T_{MR}$ sont respectivement : $T_{MD} \pm \sigma_{TMD}.Z_{\alpha/2}$ et $T_{MR} \pm \sigma_{TMR} \cdot Z_{\alpha/2}$ avec :

$$\sigma_{TMD} = \sqrt{\frac{T_{MD}(1 - T_{MD})}{N_I}}, \quad \sigma_{TMR} = \sqrt{\frac{T_{MR}(1 - T_{MR})}{N_C}}$$

$$Z_{\alpha/2} = \begin{cases} 1.645 \ pour\ un\ IC\ à\ 90\% \ (IC_{90\%}) \\ 1.960 \ pour\ un\ IC\ à\ 95\% \ (IC_{95\%}) \\ 2.576 \ pour\ un\ IC\ à\ 99\% \ (IC_{99\%}) \end{cases}$$

Ces définitions permettent d'obtenir les intervalles de confiances IC des résultats fournis autour des taux typiques d'erreurs rencontrés. Avec par exemple $N_I = 98$ et $N_C = 84$, les intervalles de confiance IC sur les différentes erreurs sont quasi similaires. Dans les résultats proposés, $T_{MD}$ et $T_{MR}$ varie typiquement entre 1% et 10%, si bien que leurs intervalles de confiances valent :

| $T_{MD}$ | $\sigma_{TMD}$ | $IC_{90\%}$ | $IC_{95\%}$ | $IC_{99\%}$ |
|------|------|------|------|------|
| 1% | 1,01E-02 | 1,6% | 2,0% | 2,6% |
| 5% | 2,20E-02 | 3,6% | 4,3% | 5,7% |
| 10% | 3,03E-02 | 5.0% | 5.9% | 7,8% |

L'interprétation par exemple de l'intervalle de confiance $IC_{95\%}$ est l'intervalle qui a 95% de chance de contenir la vraie valeur d'erreur du système. En d'autres termes, pour un taux de mauvaises détections de 5%, on est sûr à 95% que l'erreur de détection calculée est comprise entre 0,7% et 9,4%. Il est important de noter que ces intervalles de confiance sont directement reliés à la taille des échantillons testés et que de ces derniers dépend également la fiabilité des évaluations des algorithmes de détection utilisés en entrée du système.

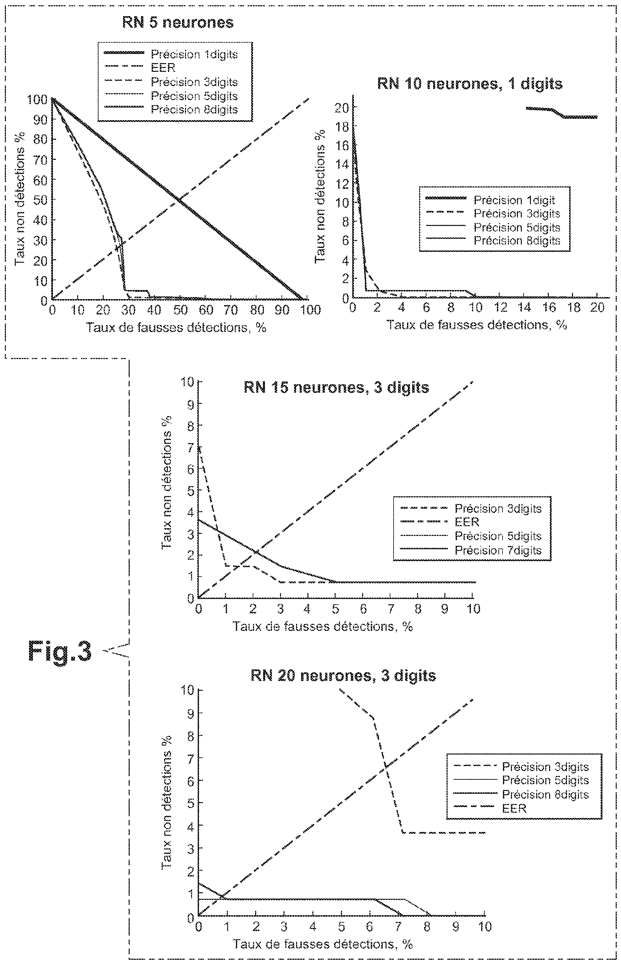

Dans les résultats de test présentés ci-après en référence à la figure 3, les différents réseaux de neurones construits sont appris sur l'ensemble des essais, puis convertis suivant la modélisation Simulink® pour être évalués en simulation de détection. Selon ces tests, on module la complexité du réseau d'une part, en jouant sur le nombre de neurones et, d'autre part, en jouant sur la quantification des paramètres des neurones (précision des valeurs poids et couches stockées dans le fichier de calibration).

Chaque graphique de la figure 3 correspond aux résultats des réseaux de neurones construits avec différents nombres de neurones, respectivement 5, 10, 15 et 20. Chacun des graphiques montre les fronts de Pareto obtenus pour différentes précisions des paramètres (poids et biais des fonctions d'activations des neurones). La précision est évaluée simplement en tronquant les valeurs numériques à un nombre de chiffre significatifs (appelé digits dans les figures).

Ces résultats montrent que l'on obtient de bons résultats pour des réseaux à partir de 10 neurones et que la quantification n'influe plus sur les résultats au-delà de 5 chiffres significatifs. La quantification à 1 chiffre significatif est insuffisante, celle à 3 chiffres dégrade les performances de quelques pourcents. Ces résultats montrent qualitativement une bonne robustesse des réseaux de neurones à la quantification et surtout un bon conditionnement des fonctions de détections apprises.

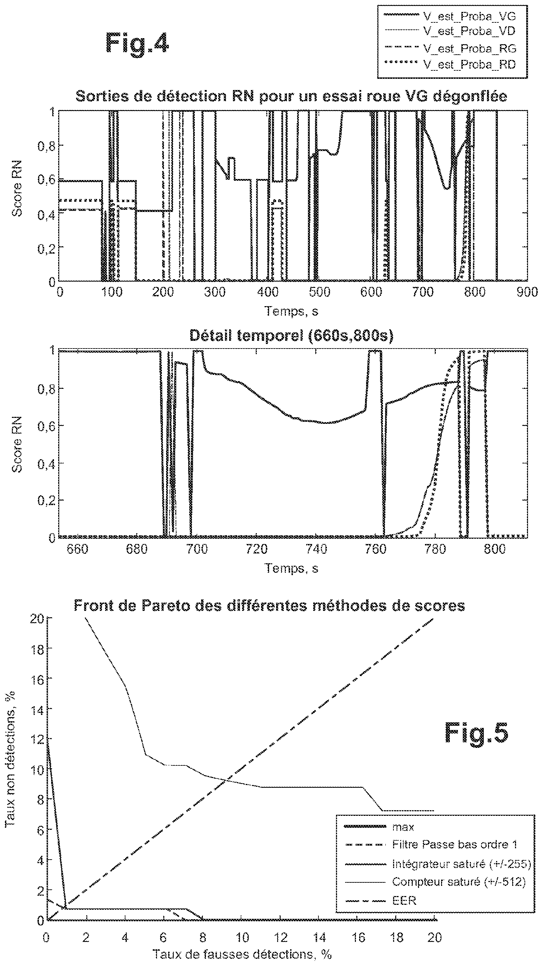

La figure 4 montre un exemple des scores de détection fournis en sortie d'un réseau de neurones modélisé sous Simulink®, dans le cas d'un essai où seule la roue VG (avant gauche) est dégonflée de -20% (courbe V_est_Proba_VG). Cette figure montre que si le score fourni par le module de décision à base de réseau de neurones pour la roue VG est globalement plus important, les autres scores prennent également des valeurs importantes sur de courtes périodes temporelles qui peuvent créer des fausses détections.

Aussi, une étape de décision finale pour détecter si au moins un des pneumatiques équipant les roues du véhicule est dans un état de sous-gonflage est mise en oeuvre, consistant en un compromis effectué entre les différents scores de détection d'état de sous-gonflage de pneumatique fournis en sortie du réseau de neurones pour chaque roue respectivement, de manière à positionner un unique seuil de calibration de la détection.

Par exemple, la façon la plus simple de réaliser ce compromis est de mettre en oeuvre un seuillage de la sortie du réseau de neurones pour réaliser la détection. Selon une variante, la détection peut reposer sur un filtrage passe bas du premier ordre, pour lisser la détection et éviter des pics de score générant des fausses détections. Selon encore une variante, on réalise une intégration du score avec saturation. Par exemple, le score centré sur 0,5 est intégré et la valeur intégrée est saturée entre -255 et 255. Selon encore une autre variante, on utilise un compteur saturé. Ainsi, on ajoute +1 si le score de détection en sortie du réseau de neurones est supérieur ou égal à un seuil supérieur et -1 si le score est inférieur ou égal à un seuil inférieur. Les seuils inférieur et supérieur sont par exemple égaux à 0,5 et le compteur de score est de plus saturé entre -512 et 512.

Pour comparer les différentes méthodes de compromis entre les différents scores en sortie du réseau de neurones permettant de déclencher une alerte de détection d'état de sous-gonflage d'au moins une roue, une calibration de seuil sur les scores de détection pour déclencher cette alerte est effectuée pour obtenir le front de Pareto des différentes méthodes. La figure 5 illustre les résultats obtenus en utilisant le réseau de neurones à 20 neurones avec la quantification la plus précise (8 chiffres significatifs) dans le cas la roue VG (avant gauche) dégonflée de -20%. Il s'avère que les méthodes par intégration et filtrage/lissage permettent d'obtenir les meilleurs taux de bonnes détections. La méthode avec filtrage présente l'avantage de donner un taux de non détections beaucoup plus faible (<2%) que celle par intégration (>12%) dans le cas où l'on a aucune fausse détection. Le filtrage présente en outre l'avantage de ne pas nécessiter de réglage supplémentaire, contrairement à la méthode par intégration impliquant de définir des valeurs de saturation, car il laisse les scores de détection dans leurs plages de valeurs initiales, c'est-à-dire entre 0 et 1.

## Revendications

1. Procédé d'estimation de l'apparition d'un défaut de pression (H1) sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, une donnée de probabilité de sous-gonflage et de taux de confiance associé en fonction d'une plage de vitesse de la roue, ledit procédé étant **caractérisé en ce qu'**il utilise un module de décision basé sur un réseau de neurones (RN) dont les entrées sont les données de probabilité et de taux de confiance pour chaque roue fournies par les premier et deuxième algorithmes, ledit réseau de neurones (RN) ayant subi préalablement une phase d'apprentissage et fournissant en sortie pour chaque roue du véhicule un score (score_RN) de détection d'état de sous-gonflage de pneumatique.

2. Procédé selon la revendication 1, **caractérisé en ce qu'**il comprend des étapes de relever pendant la phase d'apprentissage des données fournies par les premier et deuxième algorithmes et appliquer des premières règles de décision prédéfinies pour classer chaque situation de sous-gonflage des pneumatiques détectée à partir des données des premier et deuxième algorithmes dans une catégorie de bonne ou mauvaise détection (BD, MD) d'une situation de sous-gonflage, ainsi que de bon ou mauvais rejet (BR, MR) d'une situation de sous-gonflage ; créer une base d'apprentissage, pendant la phase d'apprentissage, répertoriant pour lesdites situations leur classification préalablement établie et des caractéristiques issues des données des premier et deuxième algorithmes ; effectuer l'entraînement dudit réseau de neurones (RN) par la base d'apprentissage pour élaborer des secondes règles de décision permettant de calculer le score (score_RN) de détection d'état de sous-gonflage pour chaque roue correspondant à une situation de sous-gonflage détectée à partir des données fusionnées des premier et deuxième algorithmes ; et calculer le score (score_RN), pendant une phase d'exécution, en appliquant les secondes règles de décision aux données fournies par les premier et deuxième algorithmes.

3. Procédé selon l'une quelconque des revendications 1 ou 2, **caractérisé en ce qu'**il comprend une étape de décision finale pour détecter si au moins un des pneumatiques équipant les roues du véhicule est dans un état de sous-gonflage, basée sur un compromis entre les différents scores (score_RN) de détection d'état de sous-gonflage de pneumatique fournis en sortie du réseau de neurones (RN) pour chaque roue respectivement, de manière à positionner un unique seuil de calibration de la détection.

4. Procédé selon la revendication 3, **caractérisé en ce que** le compromis réalise un seuillage des scores (score_RN) en sortie du réseau de neurones (RN).

5. Procédé selon la revendication 3, **caractérisé en ce que** le compromis met en oeuvre un filtre passe-bas du premier ordre appliqué aux scores (score_RN) en sortie du réseau de neurones (RN).

**6.** Procédé selon la revendication 3, **caractérisé en ce que** le compromis réalise une intégration des scores (score_RN) en sortie du réseau de neurones (RN), les valeurs de score intégrées étant saturées par rapport à des valeurs de saturation prédéfinies.

**7.** Système de surveillance de la pression des pneumatiques équipant les roues d'un véhicule automobile du type comportant un premier algorithme d'estimation de l'apparition d'un défaut de pression (H1) sur au moins un des pneumatiques basé sur une analyse de l'écart de vitesses entre chacune des roues et un deuxième algorithme d'estimation de l'apparition d'un défaut de pression (H1) sur au moins un des pneumatiques basé sur une analyse spectrale de la vitesse de roue, chacun des premier et deuxième algorithmes étant adapté pour fournir, pour chaque roue, une donnée de probabilité de sous-gonflage et de taux de confiance associé en fonction d'une plage de vitesse de la roue, ledit système étant **caractérisé en ce qu'**il comprend un module de décision basé sur un réseau de neurones (RN) dont les entrées sont les données de probabilité et de taux de confiance pour chaque roue fournies par les premier et deuxième algorithmes, ledit réseau de neurones (RN) ayant subi préalablement une phase d'apprentissage et étant apte à fournir en sortie pour chaque roue du véhicule un score (score_RN) de détection d'état de sous-gonflage de pneumatique.

**Patentansprüche**

**1.** Verfahren zur Schätzung des Auftretens eines Druckmangels (H1) an mindestens einem der Räder eines Kraftfahrzeugs bestückenden Luftreifen, wobei die Schätzung aus einer Analyse der Winkelgeschwindigkeiten der Räder gemäß einem ersten Algorithmus basierend auf einer Analyse der Geschwindigkeitsabweichung zwischen jedem der Räder und gemäß einem zweiten Algorithmus basierend auf einer Spektralanalyse der Radgeschwindigkeit resultiert, wobei jeder der ersten und zweiten Algorithmen für jedes Rad einen Datenwert der Wahrscheinlichkeit eines Unterdrucks und einer zugeordneten Vertrauensrate abhängig von einem Geschwindigkeitsbereich des Rads liefert, wobei das Verfahren **dadurch gekennzeichnet ist, dass** es ein auf einem Neuronennetz (RN) basierendes Entscheidungsmodul verwendet, dessen Eingänge die Wahrscheinlichkeits- und Vertrauensratendaten für jedes Rad sind, die von den ersten und zweiten Algorithmen geliefert werden, wobei das Neuronennetz (RN) vorher eine Lernphase erfahren hat und am Ausgang für jedes Rad des Fahrzeugs einen Score (score_RN) einer Luftreifen-Unterdruckzustandserfassung liefert.

**2.** Verfahren nach Anspruch 1, **dadurch gekennzeichnet, dass** es Schritte des Erfassens während der Lernphase der von den ersten und zweiten Algorithmen gelieferten Daten und des Anwendens erster vordefinierter Entscheidungsregeln, um jede Unterdrucksituation der Luftreifen, die ausgehend von den Daten der ersten und zweiten Algorithmen erfasst wird, in einer Kategorie guter oder schlechter Erfassung (BD, MD) einer Unterdrucksituation sowie guter oder schlechter Ablehnung (BR, MR) einer Unterdrucksituation einzuordnen; des Erzeugens einer Lernbasis, während der Lernphase, die für die Situationen ihre vorher erstellte Einordnung und Merkmale auflistet, die von den Daten der ersten und zweiten Algorithmen stammen; des Durchführens des Antriebs des Neuronennetzes (RN) durch die Lernbasis, um zweite Entscheidungsregeln zu erarbeiten, die es ermöglichen, den Score (score_RN) der Unterdruckzustandserfassung für jedes Rad zu berechnen, der einer Unterdrucksituation entspricht, die ausgehend von den fusionierten Daten der ersten und zweiten Algorithmen erfasst wird; und des Berechnens des Scores (score_RN), während einer Ausführungsphase, durch Anwenden der zweiten Entscheidungsregeln an die von den ersten und zweiten Algorithmen gelieferten Daten enthält.

**3.** Verfahren nach einem der Ansprüche 1 oder 2, **dadurch gekennzeichnet, dass** es einen Schritt der endgültigen Entscheidung enthält, um zu erfassen, ob mindestens einer der die Räder des Fahrzeugs bestückenden Luftreifen in einem Unterdruckzustand ist, basierend auf einem Kompromiss zwischen den verschiedenen Scores (score_RN) der Luftreifen-Unterdruckzustandserfassung, die am Ausgang des Neuronennetzes (RN) für jedes Rad geliefert werden, um eine einzige Kalibrierungsschwelle der Erfassung zu positionieren.

**4.** Verfahren nach Anspruch 3, **dadurch gekennzeichnet, dass** der Kompromiss einen Schwellwertvergleich der Scores (score_RN) am Ausgang des Neuronennetzes (RN) durchführt.

**5.** Verfahren nach Anspruch 3, **dadurch gekennzeichnet, dass** der Kompromiss ein Tiefpassfilter erster Ordnung verwendet, das an die Scores (score_RN) am Ausgang des Neuronennetzes (RN) angewendet wird.

**6.** Verfahren nach Anspruch 3, **dadurch gekennzeichnet, dass** der Kompromiss eine Integration der Scores (score_RN) am Ausgang des Neuronennetzes (RN) durchführt, wobei die integrierten Score-Werte bezüglich vordefinierter Sättigungswerte gesättigt sind.

7. System zur Überwachung des Drucks der die Räder eines Kraftfahrzeugs bestückenden Luftreifen von der Art, das einen ersten Schätzalgorithmus des Auftretens eines Druckmangels (H1) an mindestens einem der Luftreifen basierend auf einer Analyse der Geschwindigkeitsabweichung zwischen jedem der Räder und einen zweiten Schätzalgorithmus des Auftretens eines Druckmangels (H1) an mindestens einem der Luftreifen basierend auf einer Spektralanalyse der Radgeschwindigkeit aufweist, wobei jeder der ersten und zweiten Algorithmen geeignet ist, für jedes Rad einen Datenwert der Wahrscheinlichkeit eines Unterdrucks und einer zugeordneten Vertrauensrate abhängig von einem Geschwindigkeitsbereich des Rads zu liefern, wobei das System **dadurch gekennzeichnet ist, dass** es ein Entscheidungsmodul basierend auf einem Neuronennetz (RN) enthält, dessen Eingänge die Wahrscheinlichkeits- und Vertrauensratendaten für jedes Rad sind, die von den ersten und zweiten Algorithmen geliefert werden, wobei das Neuronennetz (RN) vorher eine Lernphase erfahren hat und fähig ist, am Ausgang für jedes Rad des Fahrzeugs einen Score (score_RN) einer Luftreifen-Unterdruckzustanderfassung zu liefern.

## Claims

1. Method for evaluating the occurrence of a lack of pressure (H1) in at least one of the tyres fitted on the wheels of a motor vehicle, said evaluation resulting from an analysis of the angular speeds of the wheels in accordance with a first algorithm based on an analysis of the difference in speeds between each of the wheels and in accordance with a second algorithm based on a spectral analysis of the wheel speed, wherein each of the first and second algorithms supplies, for each wheel, an item of data on the probability of underinflation and on the associated confidence level depending on a speed range of the wheel, said method being **characterized in that** it uses a decision module based on a neural network (RN) the inputs of which are the data on the probability and confidence level for each wheel, which data are supplied by the first and second algorithms, said neural network (RN) having undergone a prior learning phase and supplying, at the output, for each wheel of the vehicle, a tyre underinflation state detection score (score_RN).

2. Method according to Claim 1, **characterized in that** it comprises steps of noting, during the learning phase, data supplied by the first and second algorithms and applying predefined first decision rules in order to classify each situation of underinflation of the tyres that is detected on the basis of the data from the first and second algorithms into a category of correct or incorrect detection (BD, MD) of a situation of underinflation, and a correct or incorrect rejection (BR, MR) of a situation of underinflation; creating a learning base, during the learning phase, that indexes, for said situations, their previously established classification and features arising from the data from the first and second algorithms; training said neural network (RN) using the learning base in order to draw up second decision rules that make it possible to calculate the underinflation state detection score (score_RN) for each wheel corresponding to a situation of underinflation detected on the basis of the combined data from the first and second algorithms; and calculating the score (score_RN), during an execution phase, by applying the second decision rules to the data supplied by the first and second algorithms.

3. Method according to either one of Claims 1 and 2, **characterized in that** it comprises a final decision step for detecting whether at least one of the tyres fitted on the wheels of the vehicle is in an underinflated state, based on a compromise between the various tyre underinflation state detection scores (score_RN) supplied at the output of the neural network (RN) for each wheel, respectively, so as to stipulate a single detection calibration threshold.

4. Method according to Claim 3, **characterized in that** the compromise carries out a thresholding of the scores (score_RN) at the output of the neural network (RN).

5. Method according to Claim 3, **characterized in that** the compromise implements a first-order low-pass filter applied to the scores (score_RN) at the output of the neural network (RN).

6. Method according to Claim 3, **characterized in that** the compromise carries out an integration of the scores (score_RN) at the output of the neural network (RN), the integrated score values being saturated with respect to predefined saturation values.

7. System for monitoring the pressure of the tyres fitted on the wheels of a motor vehicle, of the type including a first algorithm for evaluating the occurrence of a lack of pressure (H1) in at least one of the tyres based on an analysis of the difference in speeds between each of the wheels and a second algorithm for evaluating the occurrence of a lack of pressure (H1) in at least one of the tyres based on a spectral analysis of the wheel speed, each of the first and second algorithms being designed to supply, for each wheel, an item of data on the probability of underinflation and on an associated confidence level depending on a speed range of the wheel, said system being **characterized in that** it comprises a decision module based on a neural network (RN) the inputs of which are the data on the probability and confidence level for each wheel, which data are supplied by the first and second algorithms, said neural network (RN) having undergone a prior learning phase and being capable of supplying, at the output, for each wheel of the vehicle, a tyre underinflation state detection score (score_RN).

# Fig.1

**Valeur détectée**

| | H0 aucune roue dégonflée | H1 au moins une roue dégonflée |
|---|---|---|
| **H0 aucune roue dégonflée** | Bon rejet (BR) | Fausse détection (FD) Mauvaise détection (MD) Fausse alarme (FA) |
| **H1 au moins une roue dégonflée** | Mauvais rejet (MR) Non détections (ND) | Bonne détection (BD) |

**Valeur connue**

# Fig.2

**RN 5 neurones**

Précision 1digits
EER
Précision 3digits
Précision 5digits
Précision 8digits

Taux non détections %

Taux de fausses détections, %

**RN 10 neurones, 1 digits**

Précision 1digit
Précision 3digits
Précision 5digits
Précision 8digits

Taux non détections %

Taux de fausses détections, %

**RN 15 neurones, 3 digits**

Précision 3digits
EER
Précision 5digits
Précision 7digits

Taux non détections %

Taux de fausses détections, %

# Fig.3

**RN 20 neurones, 3 digits**

Précision 3digits
Précision 5digits
Précision 8digits
EER

Taux non détections %

Taux de fausses détections, %

## Fig.4

V_est_Proba_VG
V_est_Proba_VD
V_est_Proba_RG
V_est_Proba_RD

**Sorties de détection RN pour un essai roue VG dégonflée**

**Détail temporel (660s,800s)**

**Front de Pareto des différentes méthodes de scores**

## Fig.5

max
Filtre Passe bas ordre 1
Intégrateur saturé (+/-255)
Compteur saturé (+/-512)
EER

**EP 3 068 636 B1**

**Documents brevets cités dans la description**

- FR 2927018
- WO 2012127139 A
- US 2007061100 A
- EP 0933237 A